# EUROPEAN PATENT SPECIFICATION

(11) **EP 3 106 724 B1**
(45) Date of publication and mention of the grant of the patent: **08.05.2019**
(21) Application number: 15197211.4
(22) Date of filing: 01.12.2015
(51) Int. Cl.: F16K 31/06, F03D 15/00, F03D 9/28

(54) **POPPET VALVE, HYDRAULIC MACHINE, AND POWER GENERATING APPARATUS OF RENEWABLE-ENERGY TYPE**
TELLERVENTIL, HYDRAULISCHE MASCHINE UND VORRICHTUNG ZUR ERZEUGUNG VON STROM AUS ERNEUERBARER ENERGIE
SOUPAPE À CHAMPIGNON, MACHINE HYDRAULIQUE ET APPAREIL DE GÉNÉRATION DE PUISSANCE DE TYPE À ÉNERGIE RENOUVELABLE

(30) Priority: 18.06.2015 JP 2015122528
(43) Date of publication of application: 21.12.2016
(73) Proprietor: Mitsubishi Heavy Industries, Ltd., Tokyo 108-8215 (JP); Artemis Intelligent Power Limited, Loanhead, Midlothian EH20 9TB (GB)
(72) Inventor: Noguchi, Toshihide, Tokyo, 108-8215 (JP); Hirano, Haruhiko, Tokyo, 108-8215 (JP); Kawabata, Shinji, Tokyo, 108-8215 (JP); Shimizu, Masayuki, Tokyo, 108-8215 (JP); Hayashi, Toshikazu, Tokyo, 108-8215 (JP); Stein, Uwe, Lothian, EH20 9TB (GB); Voller, Gordon, Lothian, EH20 9TB (GB); Rampen, William, Lothian, EH20 9TB (GB)
(74) Representative: Henkel, Breuer & Partner

(56) References cited:
- WO-A1-2014/024232
- DE-A1- 10 203 325
- DE-A1- 10 311 486
- DE-A1- 19 936 711
- DE-A1-102013 220 047
- JP-U- H0 250 581
- JP-U- H0 571 563

## Description

### TECHNICAL FIELD

The present disclosure relates to a poppet valve, a hydraulic machine, and a power generating apparatus of renewable-energy type.

### BACKGROUND ART

A known poppet valve is configured such that a poppet moves linearly between a seat surface of a valve seat and an inner wall surface of a valve casing. In a poppet valve of this type, an end of the poppet contacts the seat surface to close a flow path when the poppet valve is to be closed, and the end of the poppet moves away from the seat surface and the other end contacts the valve casing to open the flow path when the poppet valve is to be opened.

For instance, WO 2013/118182 A describes a poppet valve configured such that a poppet moves between a seat surface of a valve seat and an inner wall surface of a valve casing along a guide member. In this poppet valve, when the poppet valve is to be opened, the poppet is retained in a state where the inner wall surface of the valve casing is in surface contact with an end surface of the poppet that is opposite to a side of the poppet that contacts the seat surface.

Further, WO 2014/024232 A on which the preamble portion of claim 1 is based describes a poppet valve used as a high-pressure valve in a hydraulic machine. In this poppet valve, the poppet moves along a poppet rod that functions as a guide member, and when the poppet valve is to be opened, the poppet is retained in a state where the inner wall surface of the valve casing accommodating a solenoid is in surface contact with a solenoid-contacting surface of the poppet.

DE 10203325 A1 discloses a solenoid valve which is provided with protrusions between a magnet core and a magnet anchor for the purpose of avoiding sticking of the magnet anchor.

JP H02-50581 U discloses s solenoid valve which is used as an actuator for operating a control valve. The valve includes a plunger inserted axially movable in a plunger chamber and a contact surface of the plunger provided to be abutted with another seat surface is provided with radial grooves defining a flow path for releasing a fluid between the abutting surfaces to improve the responsiveness of the valve.

### SUMMARY

However, in a case where a poppet valve is configured such that the poppet is retained in a state where the inner wall surface of the valve casing is in surface contact with an end surface of the poppet when the poppet valve is to be opened as described in WO 2013/118182 A and WO 2014/024232 A, the responsiveness of the valve motion may decrease. For instance, the inner wall surface of the valve casing and an end surface of the poppet is in close surface contact while the poppet is open, but the end surface of the poppet moves away from the inner wall surface of the valve casing during a valve-closing motion, which leads to formation of a gap between the end surface of the poppet and the inner wall surface of the valve casing, thereby generating brief expansion in the space between the two surfaces and reducing a pressure in the space, which generates a pressure differential between the end surface of the poppet and the other surface of the poppet adjacent to the valve seat. This pressure differential may bring about a decrease in the responsiveness of the valve-closing motion. Similarly, during a valve-opening motion, when the end surface of the poppet approaches the inner wall surface of the valve casing, brief compression may occur in the space between the above surfaces to increase the pressure of the space, and the responsiveness of the valve-opening motion may decrease due to a pressure differential created between the end surface of the poppet and the other surface of the poppet adjacent to the valve seat.

An object of at least some embodiments of the present invention is to provide a poppet valve, a hydraulic machine, and a power generating apparatus of renewable-energy type, whereby it is possible to suppress a decrease in the responsiveness of the valve motion due to a pressure differential generated between surfaces of a poppet, that is, between an end surface disposed adjacent to a valve casing and a surface disposed adjacent to a valve seat, during operation of the poppet valve.
(1) A poppet valve according to the present invention comprises the features of claim 1, including: a valve seat; a poppet disposed so as to face the valve seat; an actuator for driving the poppet; and a first valve casing in which the actuator is accommodated. The first valve casing or a plate member interposed between the poppet and the first valve casing includes a contact surface configured to be capable of partially contacting an end surface of the poppet, the end surface being opposite to the valve seat.

At least one of the contact surface or the end surface of the poppet has an uneven section which forms a space between the end surface of the poppet and the plate member or the first valve casing while the end surface of the poppet is in partial contact with the contact surface.

A total angular range, in the circumferential direction of the poppet, in which the space intersects with a (fictive) line parallel to a radial direction and passing through a center axis of the poppet, is not less than 180 angular degrees.

In the present embodiment, "an end surface of the poppet being opposite to the valve seat" refers to an end surface that is further from the valve seat, of the two surfaces of the poppet in the moving direction of the poppet. Further, in the present embodiment, in a case where the contact surface is disposed on the first valve casing, i.e., in a case where the first valve casing contacts the first end surface of the poppet, the poppet valve may not include the plate member.

In the above poppet valve (1), the plate member or the first valve casing has a contact surface capable of partially contacting the end surface of the poppet opposite to the valve seat. Further, at least one of the contact surface or the end surface of the poppet has an uneven section forming a space between the end surface of the poppet and the plate member or the first valve casing while the end surface of the poppet is in partial contact with the contact surface. Still further, a total angular range, in the circumferential direction of the poppet, in which the space intersects with a line parallel to the radial direction and passing through the center axis of the poppet, is not less than 180 angular degrees. In this way, it is possible to suppress a decrease in responsiveness of the valve motion due to a pressure differential caused between the end surface of the poppet and the surface adjacent to the valve seat when the poppet valve is in motion. Specifically, during the valve-closing motion, when the end surface of the poppet moves away from the contact surface of the plate member or the first valve casing, it is possible to suppress a rapid pressure decrease in the gap between the end surface of the poppet and the contact surface thanks to the presence of the space, which makes it possible to reduce a pressure differential between the end surface of the poppet and the surface adjacent to the valve seat. In this way, it is possible to suppress a decrease in responsiveness of the valve-closing motion due to a pressure differential between the end surface of the poppet and the surface adjacent to the valve seat. Further, since the space makes it possible to reduce the contact area between the end surface of the poppet and the contact surface, it is possible to achieve a structure such that it is difficult for the end surface and the contact surface to be in close contact, which also makes it possible to suppress a decrease in the responsiveness of the valve-closing motion. Specifically, during the valve-opening motion, when the end surface of the poppet moves toward the contact surface, it is possible to suppress a rapid pressure increase in the gap between the first end surface of the poppet and the contact surface thanks to the presence of the space, which makes it possible to reduce a pressure differential between the end surface of the poppet and the surface adjacent to the valve seat. In this way, it is possible to suppress a decrease in responsiveness of the valve-opening motion due to a pressure differential between the end surface of the poppet and the surface adjacent to the valve seat. Further, while the end surface of the poppet is in contact with the contact surface, if the fluid around the poppet is capable of flowing into the space, it is possible to reduce a pressure differential between the end surface of the poppet and the surface adjacent to the valve seat even further, and improve the responsiveness of the valve motion more effectively.
(2) In some embodiments, in the above configuration (1), the poppet valve further comprises a biasing member for biasing the poppet toward the valve seat. Each of the poppet and the first valve casing includes a magnetic part, and the actuator includes a solenoid configured to generate an electromagnetic force which attracts the poppet toward the first valve casing in an excited state against a biasing force of the biasing member.
   In a case where the poppet valve is a solenoid valve of normally-closed type as described in the above (2), the valve-closing response speed may decrease due to an attractive force generated by the residual magnetism of the valve casing, even if energization of the solenoid is halted during the valve-closing motion.
   Thus, with the above configuration (1) applied to a solenoid valve of normally-closed type, the space is formed between the end surface of the poppet in the valve-open position and a magnetic-attractive surface (the contact surface in the above (1)) of the first valve casing or the plate member, and the contact area of the above surfaces is reduced as compared to that in a case without the uneven section. Thus, it is possible to reduce the attractive force due to the remnant magnetism, and to improve the responsiveness of the valve motion (e.g. the valve-closing response speed) even further.
(3) In one embodiment, in the above configuration (2), the poppet valve further comprises a non-magnetic part disposed between the end surface of the poppet and the first valve casing, the non-magnetic part being a non-magnetic layer forming the end surface of the poppet or the plate member which is non-magnetic.
   With the above configuration (3), the end surface of the poppet in the valve-open position and the wall surface of the first valve casing are not in direct contact, and the non-magnetic part is interposed between the above surfaces. Thus, it is possible to further suppress an influence of the remnant magnetism of the first valve casing on the valve-closing motion of the poppet valve immediately after halt of energization of the solenoid, and to improve the responsiveness of the valve motion even further.
(4) In one embodiment, in any one of the above configurations (1) to (3), a contact area S₁ between the end surface of the poppet and the contact surface is smaller than a non-contact area S₂ of the end surface of the poppet, the non-contact area S₂ not contacting the contact surface.
   In the above configuration (4), since the contact area S₁ between the end surface of the poppet and the contact surface is smaller than the non-contact area S₂ which is a part of the end surface of the poppet that is not in contact with the contact surface, it is possible to further reduce a pressure differential caused between the end surface of the poppet and the surface adjacent to the valve seat when the valve is in motion, and to improve the responsiveness of the valve motion even more effectively.
(5) In some embodiments, in any one of the above configurations (1) to (4), the uneven section is formed in a mesh shape by a plurality of first grooves and a plurality of second grooves intersecting with the first grooves.
   With the above configuration (5), it is possible to form many minute uneven sections easily or to form a uniform uneven section over a wide range. Thus, it is possible to securely reduce a pressure differential caused between the end surface of the poppet and the surface adjacent to the valve seat when the valve is in motion and to improve the responsiveness of the valve motion effectively. Further, it is possible to achieve a structure such that the unevenness-forming surface is less likely to be damaged by collision between the end surface of the poppet and the wall surface of the first valve casing or the surface of the plate member.
(6) In some embodiments, in any one of the above configurations (1) to (4), the uneven section is formed by a protruding portion disposed on at least one of the end surface of the poppet or the contact surface.
   With the above configuration (6), it is possible to reduce considerably the contact area between the end surface of the poppet and the contact surface, and thus to improve the responsiveness of the valve motion more effectively. Further, it is possible to adjust the depth of the uneven section easily by changing the height of the protruding portion.
(7) In some embodiments, in any one of the above configurations (2) to (4), the poppet valve is configured to be openable and closable so as to switch a pressure in a working chamber of a hydraulic machine, and the uneven section is formed by a drain groove of working oil of the hydraulic machine, the drain groove being disposed on at least one of the end surface of the poppet or the contact surface.
   With the above configuration (7), due to the drain groove, it is possible to reduce the contact area between the end surface of the poppet and the wall surface of the first valve casing or the contact surface of the plate member. Further, since the working oil of the hydraulic machine flows into the draining groove, it is possible to reduce a pressure differential caused between the end surface of the poppet and the surface adjacent to the valve seat during the valve motion even further. Thus, it is possible to improve the responsiveness of the valve motion more effectively.
(8) In some embodiments, in any one of the above configurations (1) to (4), the uneven section is formed by a surface processed by crowning disposed on at least one of the end surface of the poppet or the contact surface.
   With the above configuration (8), it is possible to reduce a pressure differential caused between the end surface of the poppet and the surface adjacent to the valve seat even further when the valve is in motion and to improve the responsiveness of the valve motion even more effectively. Further, it is possible to achieve a structure such that the unevenness-forming surface is less likely to be damaged by collision between the end surface of the poppet and the wall surface of the first valve casing or the surface of the plate member.
(9) In the poppet valve of the invention, the poppet valve further comprises: a second valve casing forming the valve seat; and an annular spacer which is disposed on a radially outer side of the poppet and between the first valve casing and the second valve casing, and on which at least one communication window for bringing an exterior space into communication with an interior space accommodating the poppet is formed.
   With the above configuration (9), since the annular spacer is disposed between the first valve casing and the second valve casing forming the valve seat and the poppet is disposed radially inside the annular spacer, it is possible to secure a suitable space in which the poppet moves. Further, the communication windows formed on the annular spacer form inner channels through which the exterior space communicates with the interior space of the annular spacer, which makes it possible to form a smooth flow of fluid between the channel (opening) to be opened and closed by the poppet and a channel outside the poppet valve.
(10) In the above configuration (9), according to the invention, the annular spacer includes a plurality of leg parts extending toward the second valve casing. The plurality of leg parts are arranged at intervals in a circumferential direction of the annular spacer. The at least one communication window is disposed on a position between adjacent two of the leg parts in the circumferential direction.

In the above configuration (9), when the poppet is in the valve-open position, fluid flows into the channel (opening) from between the poppet and the second valve casing after flowing through the communication windows of the annular spacer. Then, as the poppet shifts from the valve-open position to the valve-closed position, the poppet closes the communication windows of the annular spacer, and the flow of the fluid collides with the outer peripheral surface of the poppet. Due to the shock of the collision, a rim portion of the communication windows that is adjacent to the second valve casing (hereinafter, referred to as a casing-side rim portion) receives a stress in a direction toward the second valve casing. Specifically, the pressure of a space formed by the outer peripheral surface of the poppet and the communication windows increases due to the shock of the collision, and the pressure of a space (gap) formed by the casing-side rim portion of the communication windows and the second valve casing decreases, thereby generating a pressure differential between the two spaces disposed on either side of the casing-side rim portion of the communication windows. The stress generated by the pressure differential raises the possibility of damage to the casing-side rim portion of the communication windows.

In view of this, in the above configuration (10), the annular spacer includes the plurality of leg parts extending toward the second valve casing, and the communication windows are disposed on a position between adjacent two of the leg parts in the circumferential direction. Specifically, each communication window is defined by a pair of leg parts, and is open at a side adjacent to the second valve casing without a rim (the above casing-side rim portion).

As described above, since there is no casing-side rim portion, it is possible to avoid damage to the annular spacer due to the shock of collision between the flow of the fluid and the outer peripheral surface of the poppet when the poppet shifts from the valve-open position to the valve-closed position.

(11) In some embodiments, in the above configuration (9) or (10), a portion of the annular spacer, the portion being disposed on a side adjacent to the first valve casing as seen from the at least one communication window, has a thickness t in a moving direction of the poppet, the thickness t satisfying a relationship of t ≥ 0.03D, where D is a seat outer diameter of the poppet.

As described above, the influence of the shock due to the collision of the fluid with the outer peripheral surface of the poppet during the valve-closing motion may possibly reach a portion other than the casing-side rim portion.

In view of this, in the above configuration (11), the thickness t of a portion of the annular spacer that is adjacent to the first valve casing as seen from the communication windows is set to be not less than 0.03 times the seat outer diameter D of the poppet. The thickness t is a length of the poppet in its moving direction.

In this way, it is possible to provide the annular spacer with the strength to bear the stress generated by the shock of the collision.
(12) A hydraulic machine according to at least some embodiments of the present invention comprises: a cylinder; a piston reciprocating in the cylinder; and a poppet valve according to any one of the above (1) to (11) configured to control a communication state between an exterior flow channel and a working chamber formed by the cylinder and the piston.
(13) In some embodiments, in the above configuration (12), the hydraulic machine is connected to a high-pressure oil flow channel through which high-pressure oil flows and to a low-pressure oil flow channel through which low-pressure oil flows, and the poppet valve is configured to control a communication state between the high-pressure oil flow channel and the working chamber.
   With the above hydraulic machine (12) or (13), since the poppet valve with an excellent responsiveness is provided as described above, it is possible to improve the reliability of the hydraulic machine.
(14) In some embodiments, in the above configuration (12) or (13), the hydraulic machine is a hydraulic motor for driving a generator.
   Generally, the hydraulic motor for driving a generator is required to operate with a high reliability under harsh operational conditions such as a rotation speed of approximately 1000 rpm, for instance. Thus, by providing the poppet valve with an excellent responsiveness as described above, it is possible to secure a high reliability which can meet the requirement of the hydraulic motor for driving a generator.
(15) A power generating apparatus of renewable-energy type according to at least some embodiments of the present invention comprises: a rotor configured to rotate by receiving renewable energy; a hydraulic pump configured to be driven by the rotor to increase a pressure of working oil; a hydraulic motor configured to be driven by the working oil; and a generator configured to be driven by the hydraulic motor. At least one of the hydraulic pump or the hydraulic motor is the hydraulic machine according to the above (12) or (13).

In the above power generating apparatus of renewable-energy type (15), at least one of the hydraulic pump or the hydraulic motor is the hydraulic machine according to the above (12) to (13). As described above, since the hydraulic machine has an excellent reliability, it is possible to operate the power generating apparatus of renewable-energy type stably.

According to at least one embodiment of the present invention, it is possible to suppress a decrease in responsiveness of the valve motion due to a pressure differential caused between the first end surface of the poppet and the poppet surface adjacent to the valve seat when the poppet valve is in motion.

### BRIEF DESCRIPTION OF DRAWINGS

FIG. 1 is an overall configuration diagram of a wind turbine generator according to one embodiment.
FIG. 2 is a cross-sectional view of a schematic configuration of a hydraulic machine according to one embodiment.
FIG. 3 is a cross-sectional view of a high-pressure valve (poppet valve) and a low-pressure valve with the peripheral structure thereof according to one embodiment.
FIG. 4A is a cross-sectional view of a poppet valve according to one embodiment.
FIG. 4B is a cross-sectional view of a poppet valve according to another embodiment.
FIG. 5 is a planar view of the first end surface or a contact surface.
FIG. 6A is a planar view of a poppet according to one embodiment, as seen from the first end surface.
FIG. 6B is a cross-sectional view of the poppet illustrated in FIG. 6A, taken along line A-A.
FIG. 6C is an enlarged cross-sectional view of the first end surface of the poppet illustrated in FIG. 6B, taken along line A-A.
FIG. 7A is a planar view of a poppet according to another embodiment, as seen from the first end surface.
FIG. 7B is a cross-sectional view of the poppet illustrated in FIG. 7A, taken along line B-B.
FIG. 7C is a cross-sectional view of the poppet illustrated in FIG. 7B, taken along line C-C (a partial cross-sectional view illustrating the first end surface alone).
FIG. 8A is a planar view of a poppet according to yet another embodiment, as seen from the first end surface.
FIG. 8B is a cross-sectional view of the poppet illustrated in FIG. 8A, taken along line D-D.
FIG. 8C is an enlarged cross-sectional view of the first end surface of the poppet illustrated in FIG. 8B.
FIG. 9A is a planar view of a poppet according to yet another embodiment, as seen from the first end surface.
FIG. 9B is a cross-sectional view of the poppet illustrated in FIG. 9A, taken along line E-E.
FIG. 9C is an enlarged cross-sectional view of the first end surface of the poppet illustrated in FIG. 9B.
FIG. 10A is a perspective view of an annular spacer according to one embodiment according to the present invention.
FIG. 10B is a perspective view of an annular spacer not according to the present invention.
FIG. 11A is a diagram for describing an oil hammer event, and a cross-sectional view schematically illustrating a communication path of an annular spacer and a poppet in a valve-open position.
FIG. 11B is a diagram for describing an oil hammer event, and a cross-sectional view schematically illustrating a communication path of an annular spacer and a poppet in a valve-closed position.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and are not intended to limit the scope of the present invention.

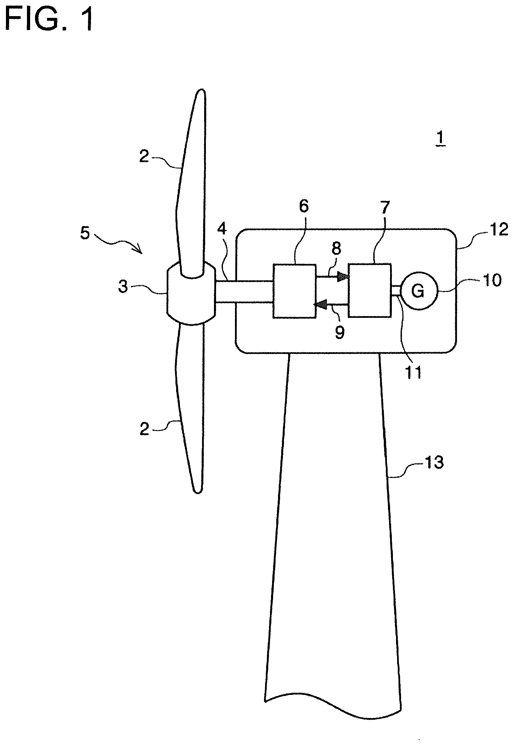

FIG. 1 is an overall configuration diagram of a wind turbine generator 1 according to one embodiment.

In the following description, a wind turbine generator 1 which is a power generating apparatus of renewable-energy type is described as an example of application of a poppet valve according to the present embodiment. However, application of the poppet valve according to the present embodiment is not limited to this, and may be a power generating apparatus of renewable-energy type of another kind, or an apparatus other than a power generating apparatus of renewable-energy type such as an industrial vehicle, an industrial machine, a marine device, or the like.

As illustrated in FIG. 1, the wind turbine generator 1 according to one embodiment includes a rotor 5 including at least one blade 2, a hub 3 to which the at least one blade 2 is mounted, and a rotation shaft 4 configured to be rotatable along with the hub 3. The rotor 5 is supported rotatably to a nacelle 12 via a main bearing, and configured to rotate when the at least one blade 2 receives wind. The nacelle 12 is mounted to an upper end portion of a tower 13 disposed on ocean or on land.

A hydraulic pump 6 is connected to the rotor 5 via the rotation shaft 4. A hydraulic motor 7 is connected to the hydraulic pump 6 via a high-pressure oil line 8 and a low-pressure oil line 9. Specifically, an outlet of the hydraulic pump 6 is connected to an inlet of the hydraulic motor 7 via the high-pressure oil line 8, and an inlet of the hydraulic pump 6 is connected to an outlet of the hydraulic motor 7 via the low-pressure oil line 9. The hydraulic pump 6 is configured to be driven by the rotor 5 to increase the pressure of working oil, thereby producing high-pressure working oil (pressurized oil). The pressurized oil produced by the hydraulic pump 6 is supplied to the hydraulic motor 7 via the high-pressure oil line 8. The hydraulic motor 7 is configured to be driven by the pressurized oil pressurized by the hydraulic pump 6. The low-pressure working oil having performed work in the hydraulic motor 7 is returned again to the hydraulic pump 6 via the low-pressure oil line 9 disposed between the outlet of the hydraulic motor 7 and the inlet of the hydraulic pump 6. A generator 10 is connected to the hydraulic motor 7 via an output shaft 11. The generator 10 is configured to be driven by the hydraulic motor 7 and to generate electric power.

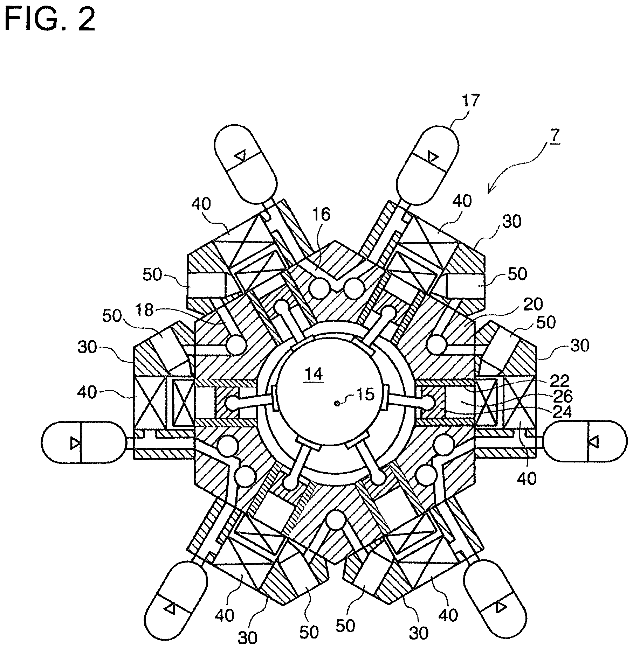

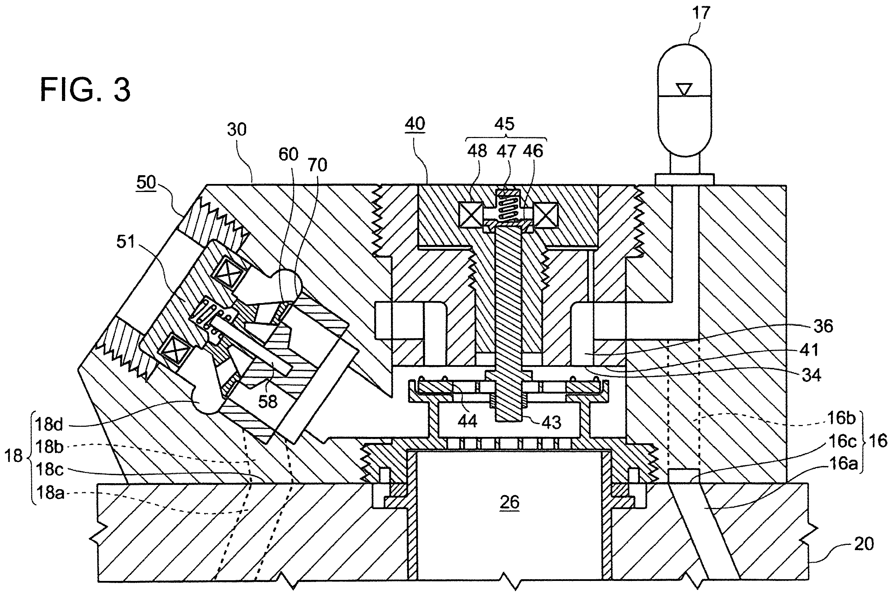

FIG. 2 is a cross-sectional view of a schematic configuration of a hydraulic machine 7 according to one embodiment. FIG. 3 is a cross-sectional view of a high-pressure valve 50 and a low-pressure valve 40 of the hydraulic machine 7 and the peripheral structure thereof according to one embodiment.

While a hydraulic motor is illustrated in FIG. 2 as the hydraulic machine 7, a hydraulic machine to which the present embodiment is to be applied is not limited to this, and may be a hydraulic pump.

In some embodiments, the hydraulic machine 7 includes a working chamber 26 formed by a cylinder 22 and a piston 24, inner flow channels 16, 18 configured to be capable of bringing the working chamber 26 and an outer flow channel (e.g. the high-pressure oil line 8 or the low-pressure oil line 9 in FIG. 1) disposed between the hydraulic pump 6 and the hydraulic motor 7 into communication, and a poppet valve (e.g. the low-pressure valve 40 or the high-pressure valve 50) disposed in the inner flow channels 16, 18 and configured to be capable of switching the communication state between the working chamber 26 and the outer flow channel.

The rotation shaft 14 is coupled to the output shaft 11 (see FIG. 1) in the case of the hydraulic motor 7, and to the rotation shaft 4 (see FIG. 1) in the case of the hydraulic pump 6.

A cylinder block 20 extends in annular shape over the entire periphery of the rotation shaft 14, and includes a plurality of cylinders 22 extending in a radial direction from a rotational axis 15 of the rotation shaft 14 at the center, a plurality of pistons 24 disposed so as to be reciprocable in the respective cylinders 22, and working chambers 26 formed by the cylinders 22 and the pistons 24.

A plurality of valve blocks 30 is disposed radially outside the cylinder block 20, corresponding to the positions of the cylinders 22. Each valve block 30 includes the low-pressure valve 40 and the high-pressure valve 50.

In the cylinder block 20 and the valve blocks 30, high-pressure oil inner flow channels 18 connected to the high-pressure oil line 8 (see FIG. 1) and low-pressure oil inner flow channels 16 connected to the low-pressure oil line 9 are formed. The high-pressure oil inner flow channels 18 and the low-pressure oil inner flow channels 16 are each connected to corresponding one of the working chambers 26. The communication state between the high-pressure oil inner flow channel 18 and the working chamber 26 is switched by opening and closing the high-pressure valve 50 disposed in the high-pressure oil inner flow channel 18. The communication state between the low-pressure oil inner flow channel 16 and the working chamber 26 is switched by opening and closing the low-pressure valve 40 disposed in the low-pressure oil inner flow channel 16.

In the hydraulic machine 7, as a result of the switching of the low-pressure valve 40 and the high-pressure valve 50, working oil flows into and out from the working chamber 26, so that the pressure energy of the working oil in the working chamber 26 is converted into the reciprocating-motion energy of the piston 24 or vice versa, and the reciprocating-motion energy of the piston 24 is converted into the rotational energy of the rotation shaft 14 or vice versa. For instance, in the hydraulic pump 6, the low-pressure valve 40 and the high-pressure valve 50 are switched suitably so as to produce high-pressure working oil using the rotational energy of the rotation shaft 4 (see FIG. 1). In the hydraulic motor 7, the low-pressure valve 40 and the high-pressure valve 50 are switched suitably so as to rotate the output shaft 11 (see FIG. 1) using the pressure energy of the high-pressure working oil.

In the present embodiment, at least one of the low-pressure valve 40 or the high-pressure valve 50 has the configuration of the poppet valve described below.

Now, as an example of a hydraulic machine, the hydraulic motor 7 will be described specifically.

In one embodiment, the hydraulic motor 7 includes the rotation shaft 14 coupled to the output shaft 11 (see FIG. 1), the cylinder block 20 disposed radially outside the rotation shaft 14, and the valve blocks 30 disposed radially outside the cylinder block 20.

The hydraulic motor 7 includes a cam shaft 14 which has eccentric cams arranged in a plurality of rows in a direction along the rotational axis 15, the cam shaft 14 serving as the rotation shaft 14.

The cylinder block 20 extends in an annular shape over the entire circumference of the cam shaft 14. The cylinder block 20 may be constituted of a plurality of sections arranged in the circumferential direction and connected to one another. Further, the cylinder block 20 includes the plurality of cylinders 22 extending in a radial direction from the rotational axis 15 of the rotation shaft 14 at the center, the plurality of pistons 24 disposed so as to be reciprocable in the respective cylinders 22, and the working chambers 26 formed by the cylinders 22 and the pistons 24. In the illustrated example, six cylinders 22 and six pistons 24 are arranged in the circumferential direction.

A plurality of valve blocks 30 is disposed radially outside the cylinder block 20, corresponding to the positions of the cylinders 22. In the illustrated example, six valve blocks 30 are arranged in the circumferential direction. The valve blocks 30 are fixed to the cylinder block 20 by bolts or the like.

In each of the cylinder block 20 and the valve blocks 30, the high-pressure oil inner flow channels 18 connected to the high-pressure oil line 8 (see FIG. 1) and the low-pressure oil inner flow channels 16 connected to the low-pressure oil line 9 (see FIG. 1) are formed. Specifically, the high-pressure oil inner flow channels 18a formed inside the cylinder block 20 and the high-pressure oil inner flow channels 18b formed inside the valve blocks 30 are connected via high pressure ports 18c of the cylinder block 20. Further, the low-pressure oil inner flow channels 16a formed inside the cylinder block 20 and the low-pressure oil inner flow channels 16b formed inside the valve blocks 30 are connected via low pressure ports 16c of the cylinder block 20.

A low-pressure oil accumulator 17 which is to be connected to the low-pressure oil inner flow channel 16b may be attached to the valve blocks 30 for the purpose of suppressing pulsation of the low-pressure oil, for instance.

In the hydraulic motor 7 having the above configuration, when high-pressure working oil is supplied to the working chamber 26 via the high-pressure oil inner flow channel 18 while the high-pressure valve 50 is open and the low-pressure valve 40 is closed, the piston 24 reciprocates in the cylinder 22 due to the pressure energy of the working oil, and the rotation shaft 14 rotates in accordance with the reciprocating motion of the piston 24. Then, the working oil having a reduced pressure is discharged from the working chamber 26 into the low-pressure oil inner flow channel 16 by closing the high-pressure valve 50 and opening the low-pressure valve 40.

In the present embodiment, at least one of the low-pressure valve 40 or the high-pressure valve 50 has the configuration of the poppet valve described below.

In one configuration example, the low-pressure valve 40 is configured to open and close an annular channel 36 communicating with the low-pressure oil inner flow channel 16. The low-pressure valve 40 includes an annular valve seat 41, a rod 43, an annular valve body 44, and a valve-body moving unit 45. The annular valve seat 41 is disposed radially outside and inside an annular opening 34 formed on one end of the annular channel 36. The rod 43 is configured to be movable along a center axis of the annular valve seat 41. The annular valve body 44 is fixed to the rod 43 and configured to be movable along the axial direction together with the rod 43. The valve-body moving unit 45 includes an armature 46, a biasing member 47, and an electric magnet 48, and is configured to move the rod 43 and the annular valve body 44 between a valve-open position and a valve-closed position.

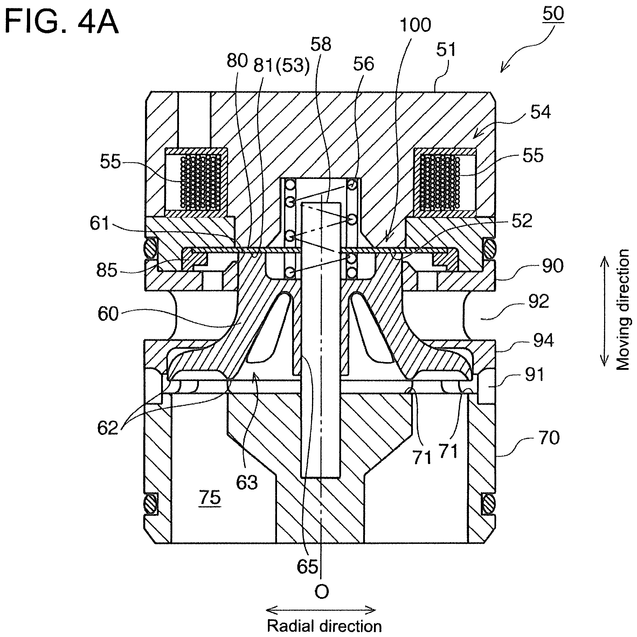

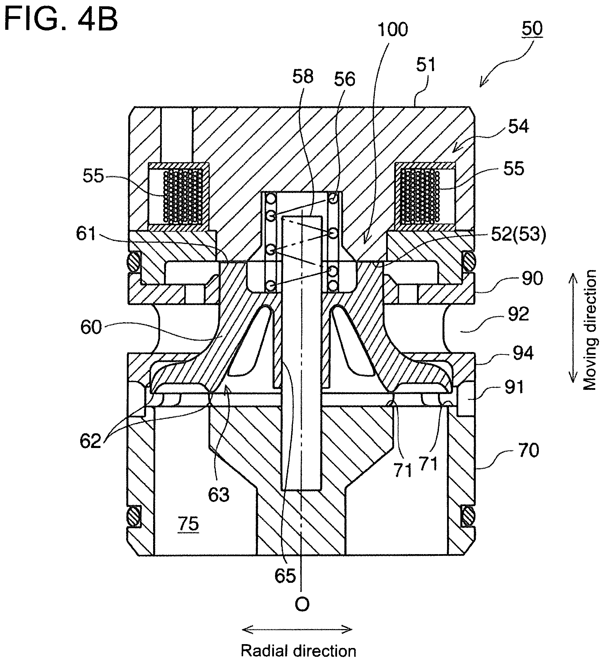

The high-pressure valve 50 will be described below with reference to FIGs. 4 to 11.

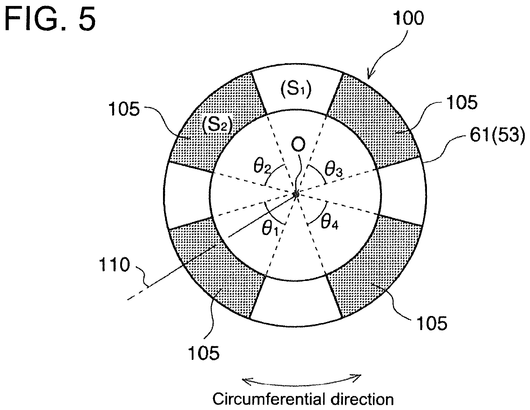

With reference to FIGs. 4A, 4B, and 5, the poppet valve 50 used as the high-pressure valve 50 will be described in detail. FIG. 4A is a cross-sectional view of the poppet valve 50 according to one embodiment. FIG. 4B is a cross-sectional view of the poppet valve 50 according to another embodiment. FIG. 5 is a planar view of the first end surface 61 or a contact surface 53. In FIGs. 4A and 4B, the poppet valve 50 is in the valve-open state.

In the illustrated examples, the poppet valve 50 according to the present embodiment is applied to the high-pressure valve 50. However, application of the poppet valve is not limited to this.

In some embodiments, the poppet valve 50 includes a valve seat 71, a poppet 60 disposed so as to face the valve seat 71, an actuator 54 for driving the poppet 60, and the first valve casing 51 in which the actuator 54 is accommodated.

In one embodiment, the poppet valve 50 further includes the second valve casing 70 disposed on the opposite side from the first valve casing 51 across the poppet 60. The valve seat 71 is formed on the second valve casing 70. Further, a rod-insertion hole 65 is formed through the poppet 60 along the center axis of the poppet 60. A rod 58 for guiding the movement of the poppet 60 is inserted through the rod-insertion hole 65. An end of the rod 58 is fixed to the second valve casing 70, and the other end is disposed inside the first valve casing 51 in a non-fixed state. In another configuration, an end of the rod 58 is fixed to the second valve casing 70, and the other end may be fixed to the first valve casing 51.

The poppet valve 50 may be a solenoid valve configured to drive the poppet 60 by an electromagnetic force. In the illustrated example, the poppet valve 50 is a solenoid valve of normally-closed type. Specifically, the poppet valve 50, which is a solenoid valve of normally-closed type, is maintained to be normally closed when the solenoid valve is demagnetized (when de-energized), and is opened only when the solenoid valve is excited (when energized). In another configuration example not illustrated in the drawing, the poppet valve may be a solenoid valve of normally-open type which is closed when the solenoid valve is excited (when energized).

In one embodiment, the poppet valve 50, which is a solenoid valve of normally-closed type, further includes a biasing member 56 for biasing the poppet 60 toward the valve seat 71. The biasing member 56 may be a spring, for instance.

The poppet 60 and the first valve casing 51 are magnetic parts.

The actuator 54 includes a solenoid 55 configured to generate, in an excited state, an electromagnetic force that attracts the poppet 60 toward the first valve casing 51 against the biasing force applied by the biasing member 56.

In the poppet valve 50, while the solenoid 55 is de-energized, the poppet 60 is biased by the biasing member 56 toward the valve seat 71 to be in the valve-closed state, and a flow channel 75 formed in the second valve casing 70 is closed.

On the other hand, when the solenoid 55 is energized, the poppet valve 50 is excited, and the armature of the poppet 60 is attracted by the electromagnetic force of the solenoid 55, and thereby the poppet 60 moves in a direction away from the valve seat 71 against the biasing force of the biasing member 56 due to the electromagnetic force to be open, and the flow channel 75 opens.

The poppet valve 50 with the above configuration further includes the following characteristic configuration.

In some embodiments, in the poppet valve 50, a plate member 80 disposed between the poppet 60 and the first valve casing 51 or the first valve casing 51 includes a contact surface 53 that is partially contactable with the first end surface 61 at the opposite side of the poppet 60 from the valve seat 71. At least one of the contact surface 53 or the first end surface 61 of the poppet 60 includes an uneven section 100 which forms a space 105 between the first end surface 61 of the poppet 60 and the plate member 80 or the first valve casing 51 while the first end surface 61 of the poppet 60 is partially in contact with the contact surface 53. An angular range 0 in the circumferential direction of the poppet 60 in which a straight line 110 passing through the center axis O of the poppet 60 and parallel to the radial direction intersects with the space 105 is 180 angular degrees or more in total. Further, the total of the angular range 0 may be from 180 to 360 angular degrees. In the example illustrated in FIG. 5, four spaces 105 are formed separate from each other in the circumferential direction of the poppet 60, and the total of the angular ranges θ₁ to θ₄ of the respective spaces 105 is 180 angular degrees or more.

In the present embodiment, in a case where the contact surface 53 is disposed on the first valve casing 51, i.e., in a case where the first valve casing 51 contacts the first end surface 61 of the poppet 60, the poppet valve 50 may not include the plate member 80 (see FIG. 4B).

With the poppet valve 50 having the above configuration, it is possible to suppress a decrease in responsiveness of the valve motion due to a pressure differential caused between the first end surface 61 of the poppet 60 and the poppet surface 63 adjacent to the valve seat 71 when the poppet valve 50 is in motion. Specifically, during the valve-closing motion, when the first end surface 61 of the poppet 60 moves away from the contact surface 53 of the plate member 80 or of the first valve casing 51, it is possible to suppress a rapid pressure decrease in the gap between the first end surface 61 of the poppet 60 and the contact surface 53 thanks to the presence of the space 105, which makes it possible to reduce a pressure differential between the first end surface 61 of the poppet 60 and the poppet surface 63 adjacent to the valve seat 71 of the poppet 60. In this way, it is possible to suppress a decrease in responsiveness of the valve-closing motion due to a pressure differential between the first end surface 61 of the poppet 60 and the poppet surface 63 adjacent to the valve seat 71. Further, since it is possible to reduce the contact area between the first end surface 61 of the poppet 60 and the contact surface 53 due to the space 105, it is possible to achieve a structure such that the first end surface 61 is less likely to contact the contact surface 53 closely, which also makes it possible to suppress a decrease in the responsiveness of the valve-closing motion. Similarly, during the valve-opening motion, when the first end surface 61 of the poppet 60 moves toward the contact surface 53, it is possible to suppress a rapid pressure increase in the gap between the first end surface 61 of the poppet 60 and the contact surface 53 thanks to the presence of the space 105, which makes it possible to reduce a pressure differential between the first end surface 61 of the poppet 60 and the poppet surface 63 adjacent to the valve seat 71. In this way, it is possible to suppress a decrease in responsiveness of the valve-opening motion due to a pressure differential between the first end surface 61 of the poppet 60 and the poppet surface 63 adjacent to the valve seat 71. Further, while the first end surface 61 of the poppet 60 is in contact with the contact surface 53, if the fluid around the poppet is capable of flowing into the space 105, it is possible to reduce a pressure differential between the first end surface 61 of the poppet 60 and the poppet surface 63 adjacent to the valve seat 71 even further, and improve the responsiveness of the valve motion more effectively. The poppet surface 63 adjacent to the valve seat 71 is a surface of the poppet 60 which includes the second end surface 62 configured to contact the valve seat 71 and a surface that is disposed so as to face the valve seat 71 but not to contact the valve seat 71, and which receives a pressure (a pressure toward the first valve casing 51 from the second valve casing 70 along the center axis O) from fluid when the poppet 60 is in the valve-open position.

Further, the total of the angular range 0 may be from 180 to 360 angular degrees.

Alternatively, the total of the angular range θ may be not less than 180 and less than 360 angular degrees. In this case, it is possible to suppress a decrease in the responsiveness of the valve motion, and to secure durability of the contact surface 53 and the first end surface 61 even when the surfaces receive a great shock when the valve is to be seated.

Further, in another embodiment, the total of the angular range 0 may be 270 angular degrees or more. In this way, it is possible to suppress a decrease in responsiveness of the valve motion due to a pressure differential generated between the first end surface 61 of the poppet 60 and the poppet surface 63 adjacent to the valve seat 71 even more effectively when the poppet valve 50 is in motion.

Alternatively, the total of the angular range 0 may be from 270 to 360 angular degrees. In this case, it is possible to suppress a decrease in the responsiveness of the valve motion even more effectively. Alternatively, the total of the angular range 0 may be not less than 270 and less than 360 angular degrees. In this case, it is possible to suppress a decrease in the responsiveness of the valve motion, and to secure durability of the contact surface 53 and the first end surface 61 even when the surfaces receive a great shock when the valve is to be seated.

Further, if the above configuration is applied to a solenoid valve of normally-closed type, the space 105 is formed between the first end surface 61 of the poppet 60 in the valve-open position and a magnetic-attractive surface (contact surface 53) of the first valve casing 51 or the plate member 80, and the contact area of the above surfaces is reduced as compared to that in a case without the uneven section 100. Thus, it is possible to reduce an attractive force due to remnant magnetism and improve the responsiveness of the valve motion (e.g. valve-closing response speed) even further.

Further, the poppet valve 50 may further include a non-magnetic part disposed between the first end surface 61 of the poppet 60 and the wall surface 52 of the first valve casing 51. In the configuration example illustrated in FIG. 4A, the non-magnetic part is the plate member 80, which is non-magnetic. Alternatively, in an example not illustrated in the drawing, the non-magnetic part may be a non-magnetic layer that forms the first end surface 61 of the poppet 60.

In the configuration example illustrated in FIG. 4A, the plate member 80 is fixed to the first valve casing 51 by a clamp 85 while contacting the first valve casing 51 via one of the surfaces.

In this configuration, the first end surface 61 of the poppet 60 in the valve-open position and the wall surface 52 of the first valve casing 51 are not in direct contact, and the non-magnetic part (plate member 80) is interposed between the above surfaces. Thus, it is possible to further suppress the influence of the remnant magnetism of the first valve casing 51 on the valve-closing motion of the poppet valve 50 immediately after halt of energization of the solenoid 55, and to improve the responsiveness of the valve motion even further.

In one embodiment, the contact area S₁ between the first end surface 61 of the poppet 60 and the contact surface 53 is smaller than the non-contact area S₂ which is an end surface of the poppet that is not in contact with the contact surface. Each of the contact area S₁ between the first end surface 61 and the contact surface 53 and the non-contact area S₂ is expressed as a sum of areas.

In this configuration, since the contact area S₁ between the first end surface 61 of the poppet 60 and the contact surface 53 is smaller than the non-contact area S₂ which is a part of the first end surface 61 of the poppet 60 that is not in contact with the contact surface 53, it is possible to further reduce a pressure differential generated between the first end surface 61 of the poppet 60 and the poppet surface 63 adjacent to the valve seat 71 when the valve is in motion, and to improve the responsiveness of the valve motion even more effectively.

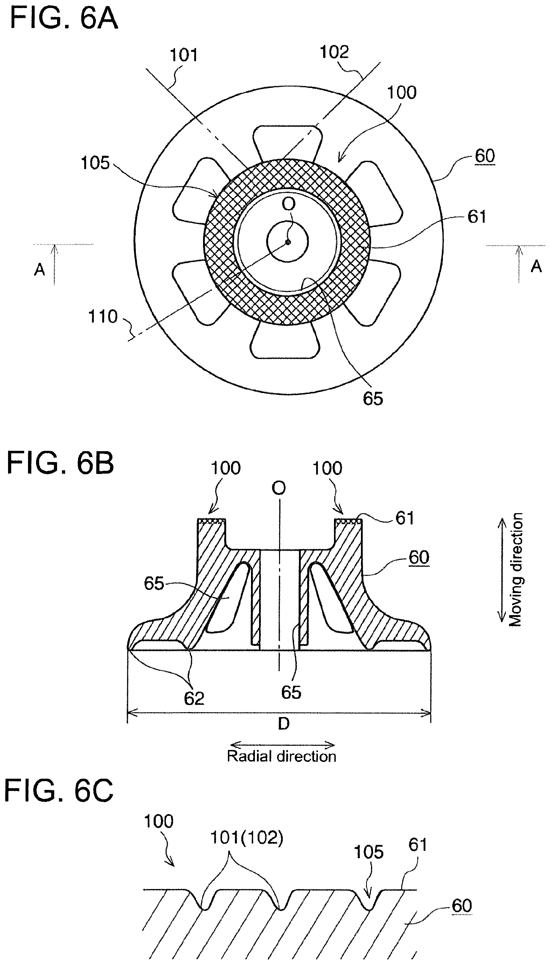

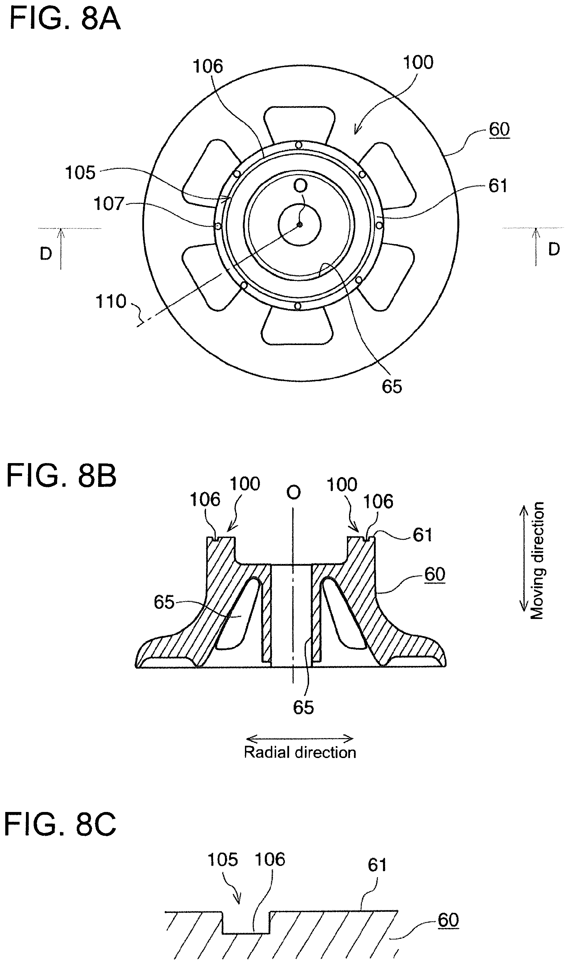

In one embodiment, a projecting portion of a line shape (see FIG. 8A, for example) or of a mesh shape (see FIG. 6A, for example) is disposed on the first end surface 61 of the poppet 60 or the contact surface 53, and configured such that the first end surface 61 of the poppet 60 and the contact surface 53 contact each other via the projecting portion when the poppet 60 is in the valve-open position. In this case, the total area of the projecting portion of the line shape or the mesh shape (linear dotted shape) may be smaller than the total area of the non-contact area on the entire surface of one of the first end surface 61 of the poppet 60 or the contact surface 53, when the operation pressure of the poppet valve 50 is from 20 to 35 Mpa.

With this configuration, it is possible to suppress a pressure differential generated between the first end surface 61 of the poppet 60 and the poppet surface 63 adjacent to the valve seat 71 even further when the valve is in motion and to improve the responsiveness of the valve motion even more effectively.

Further, in the configuration illustrated in FIG. 4A, the uneven section 100 is disposed on at least one of the first end surface 61 of the poppet 60, or a surface 81 of the non-magnetic plate member 80 facing the first end surface 61 of the poppet 60.

The first end surface 61 of the poppet 60 and the surface 81 of the plate member 80 move away from each other during the valve-closing motion. Thus, with the uneven section 100 disposed on at least one of the first end surface 61 of the poppet 60 or the surface 81 of the plate member 80, it is possible to securely reduce an attractive force caused by the remnant magnetism, and to improve the responsiveness of the valve motion effectively.

In the configuration example illustrated in FIG. 4B, the plate member 80 illustrated in FIG. 4A is not provided, and the first end surface 61 of the poppet 60 and the wall surface 52 of the first valve casing 51 are in direct contact.

In this configuration, the uneven section 100 is disposed on at least one of the first end surface 61 of the poppet 60, or the wall surface 52 of the first valve casing 51.

With reference to FIGs. 6 to 9, embodiments of the uneven section 100 will be described specifically.

While the uneven section 100 is formed on the first end surface 61 of the poppet 60 for example in FIGs. 6 to 9, the configuration of the uneven section 100 described herein can be also applied to the wall surface 52 of the first valve casing 51 or the surface 81 of the plate member 80.

FIGs. 6A to 6C are diagrams of the configuration of the first end surface 61 of the poppet 60 according to one embodiment. FIG. 6A is a planar view of the poppet 60 according to one embodiment, as seen from the first end surface 61. FIG. 6B is a cross-sectional view of the poppet 60 illustrated in FIG. 6A, taken along line A-A. FIG. 6C is an enlarged cross-sectional view of the first end surface 61 of the poppet 60 illustrated in FIG. 6B.

As illustrated in the drawings, in one embodiment, the uneven section 100 is formed in a mesh shape by the plurality of first grooves 101 and the plurality of second grooves 102 intersecting with the first grooves 101.

The first grooves 101 and the second grooves 102 may be formed by electronic-beam welding or chemical etching. In this way, it is possible to easily form grooves having a depth that is effective in suppressing a decrease in the responsiveness of the valve motion.

The first grooves 101 and the second grooves 102 may be formed to have the same depth and width, or different depths or widths.

Each of the plurality of first grooves 101 and the plurality of second grooves 102 may be formed at regular pitch. In this case, a pitch between adjacent two of the first grooves 101 or the second grooves 102 may be of from three to seven times the width of the first grooves 101 or the second grooves 102. In this way, it is possible to reduce the contact area between the first end surface 61 of the poppet 60 and the contact surface 53 and to suppress a decrease in responsiveness of the valve motion effectively.

Further, the surface on which the uneven section 100 is formed (the first end surface 61 of the poppet 60 in the illustrated example, or the wall surface 52 of the first valve casing 51 or the surface 81 of the plate member 80 in an example not illustrated) may include a hard layer which has a greater hardness than the other part, and the first grooves 101 and the second grooves 102 may be formed on the hard layer. For instance, the hard layer may be formed by plating such as hard chrome plating. In this way, even if the first end surface 61 of the poppet 60 hits the contact surface 53 repeatedly, it is possible to suppress damage to the first end surface 61 of the poppet 60.

With the above configuration, since the uneven section 100 is formed in a mesh shape by the plurality of first grooves 101 and the plurality of second grooves 102 intersecting with the first grooves 101, it is possible to form many minute uneven sections 100, or to form a uniform uneven section 100 over a broad region. With this configuration, it is possible to securely reduce a pressure differential caused between the first end surface 61 of the poppet 60 and the poppet surface 63 adjacent to the valve seat 71 when the valve is in motion and to improve the responsiveness of the valve motion effectively. Further, it is possible to achieve a structure such that the unevenness-forming surface is less likely to be damaged by collision between the first end surface 61 of the poppet 60 and the wall surface 52 of the first valve casing 51 or the surface 81 of the plate member 80.

Further, in the embodiment illustrated in FIGs. 6A to 6C, the first grooves 101 and the second grooves 102 having angles varied from that of a certain direction are crossed and formed in a mesh shape. However, the first grooves 101 or the second grooves 102 having the same angle may be formed solely. Alternatively, three kinds of grooves having different angles from a certain direction may be formed so as to intersect with one another.

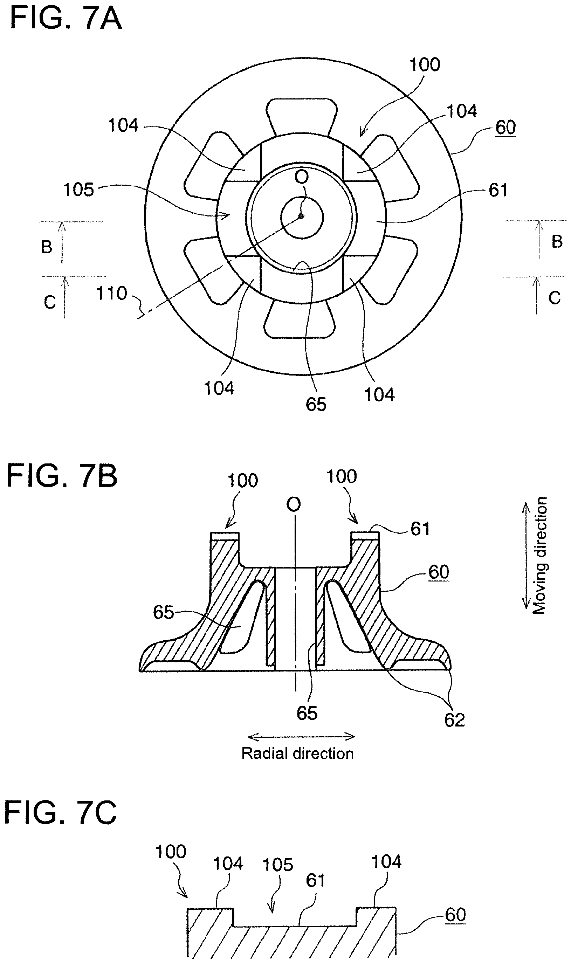

FIGs. 7A to 7C are diagrams of the first end surface 61 of the poppet 60 according to another embodiment. FIG. 7A is a planar view of the poppet 60 according to another embodiment, as seen from the first end surface 61. FIG. 7B is a cross-sectional view of the poppet 60 illustrated in FIG. 7A, taken along line B-B. FIG. 7C is a cross-sectional view of the poppet 60 illustrated in FIG. 7B, taken along line C-C (a partial cross-sectional view illustrating the first end surface 61 alone).

As illustrated in the drawings, in another embodiment, the uneven section 100 is formed by a protruding portion 104 disposed on the first end surface 61 of the poppet 60 or the contact surface 53 (the wall surface 52 of the first valve casing 51 or the surface 81 of the plate member 80). In the illustrated example, the protruding portion 104 is disposed on the first end surface 61 of the poppet 60.

A plurality of protruding portions 104 may be disposed in the circumferential direction. In this case, the plurality of protruding portions 104 may be arranged at regular intervals. In the illustrated example, four protruding portions 104 are disposed in the circumferential direction at regular intervals (intervals of 90 angular degrees).

With the above configuration, it is possible to reduce considerably the contact area between the first end surface 61 of the poppet 60 and the contact surface 53 (the wall surface 52 of the first valve casing 51 or the surface 81 of the plate member 80), and thus to improve the responsiveness of the valve motion more effectively. Further, it is possible to adjust the depth of the uneven section 100 easily by changing the height of the protruding portions 104.

FIGs. 8A to 8C are diagrams of the configuration of the first end surface 61 of the poppet 60 according to yet another embodiment. FIG. 8A is a planar view of the poppet 60 according to yet another embodiment, as seen from the first end surface 61. FIG. 8B is a cross-sectional view of the poppet 60 illustrated in FIG. 8A, taken along line D-D. FIG. 8C is an enlarged cross-sectional view of the first end surface 61 of the poppet 60 illustrated in FIG. 8B.

As illustrated in the drawings, in yet another embodiment, the poppet valve 50 is configured to be openable and closable so as to switch a pressure in a working chamber (e.g. the working chamber 26 of the hydraulic motor 7 illustrated in FIGs. 2 and 3) of a hydraulic machine (e.g. the hydraulic motor 7 or the hydraulic pump 6 illustrated in FIG. 1). In this case, the uneven section 100 is formed by a drain groove 106 for working oil of the hydraulic machine, disposed on the first end surface 61 of the poppet 60 or the contact surface 53 (the wall surface 52 of the first valve casing 51 or the surface 81 of the plate member 80). The drain groove 106 may communicate with an oil-supply channel 107 of working oil.

In the illustrated example, the drain groove 106 is formed in annular shape centered at the rod-insertion hole 65 on the first end surface 61 of the poppet 60.

With the above configuration, due to the drain groove 106, it is possible to reduce the contact area between the first end surface 61 of the poppet 60 and the contact surface 53 (the wall surface 52 of the first valve casing 51 or the surface 81 of the plate member 80). Further, since the working oil of the hydraulic machine flows into the draining groove, it is possible to reduce a pressure differential caused between the first end surface 61 of the poppet 60 and the poppet surface 63 adjacent to the valve seat 71 even further when the valve is in motion. Thus, it is possible to improve the responsiveness of the valve motion more effectively.

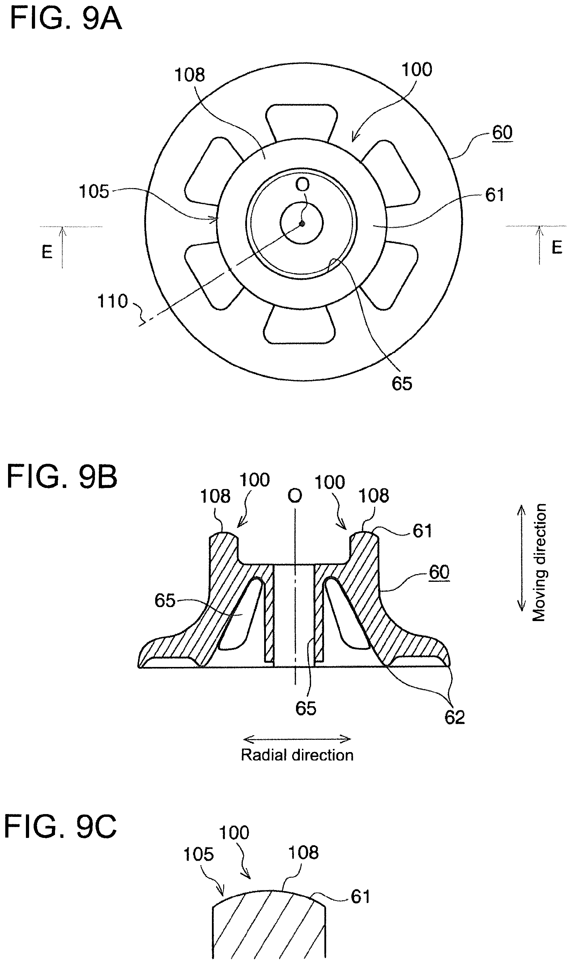

FIGs. 9A to 9C are diagrams of the configuration of the first end surface 61 of the poppet 60 according to yet another embodiment. FIG. 9A is a planar view of the poppet 60 according to yet another embodiment, as seen from the first end surface. FIG. 9B is a cross-sectional view of the poppet 60 illustrated in FIG. 9A, taken along line E-E. FIG. 9C is an enlarged cross-sectional view of the first end surface of the poppet 60 illustrated in FIG. 9B.

As illustrated in the drawings, in yet another embodiment, the uneven section 100 is formed by a surface 108 processed by crowning disposed on the end surface 61 of the poppet 60 or the contact surface 53 (the wall surface 52 of the first valve casing 51 or the surface 81 of the plate member 80).

In the illustrated example, the surface 108 is processed by crowning throughout the entire region in the radial direction of the first end surface 61 of the poppet 60. Alternatively, as an example not illustrated in the drawings, a surface may be processed by crowning in a partial region in the radial direction of the first end surface 61 of the poppet 60.

With the above configuration, it is possible to reduce a pressure differential caused between the first end surface 61 of the poppet 60 and the poppet surface 63 adjacent to the valve seat 71 even further when the valve is in motion and to improve the responsiveness of the valve motion more effectively. Further, it is possible to achieve a structure such that the unevenness-forming surface is less likely to be damaged by collision of the first end surface 61 of the poppet 60 with the contact surface 53 (the wall surface 52 of the first valve casing 51 or the surface 81 of the plate member 80).

Referring again to FIGs. 4A, 4B, and 5, in one embodiment, the poppet valve 50 further includes an annular spacer 90 which is disposed on the radially outer side of the poppet 60 between the first valve casing 51 and the second valve casing 70, and on which one or more communication windows 91, 92 for bringing an exterior space 67 into communication with an interior space 66 that houses the poppet 60 are formed.

In the illustrated example, the annular spacer 90 includes a communication window 91 disposed adjacent to the valve seat 71 (the second valve casing 70) and a communication window 92 disposed adjacent to the first valve casing 51.

With this configuration, since the annular spacer 90 is disposed between the first valve casing 51 and the second valve casing 70 forming the valve seat 71 and the poppet 60 is disposed radially inside the annular spacer 90, it is possible to secure a suitable space in which the poppet 60 moves. Further, the communication windows 91, 92 formed on the annular spacer 90 form inner channels which bring the exterior space 97 into communication with the interior space 96 of the annular spacer 90, which makes it possible to form a smooth flow of fluid between the channel (opening) 75 to be opened and closed by the poppet 60 and a channel (e.g. the high-pressure oil inner flow channel 18 illustrated in FIG. 3) outside the poppet valve 50.

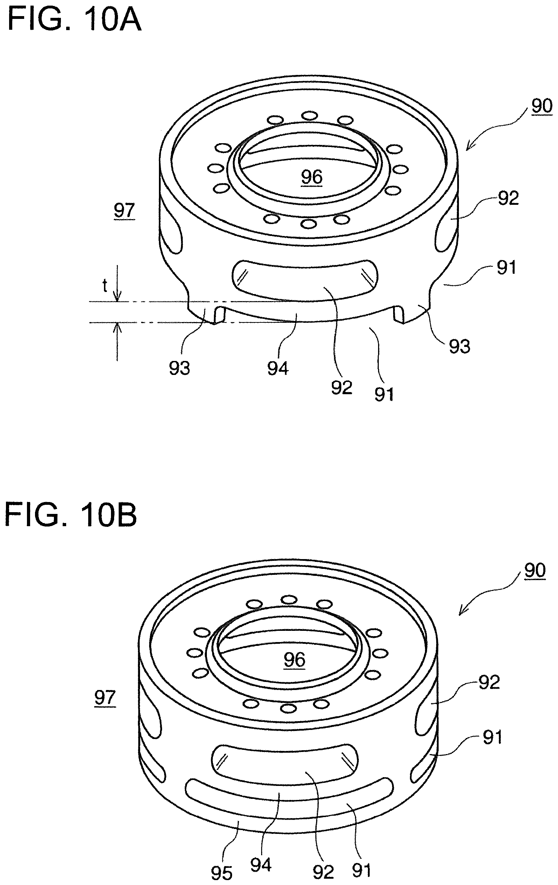

FIG. 10A is a perspective view of the annular spacer 90 according to one embodiment according to the present invention.

In one embodiment, the annular spacer 90 includes a plurality of leg parts 93 extending toward the second valve casing 70 (see FIGs. 4A, 4B, and 5). The plurality of leg parts 93 is disposed at intervals in the circumferential direction of the annular spacer 90. Further, the one or more communication windows 91 are disposed at positions between adjacent two of the leg parts 93 in the circumferential direction. Specifically, the rim of the communication windows 91 of the second valve casing 70 (see FIGs. 4A, 4B, and 5) is open at the side adjacent to the second valve casing 70. In this way, it is possible to avoid damage to the annular spacer 90 due to a flow of the fluid.

FIG. 10B is a perspective view of the annular spacer 90 not according to the present invention.

In FIG. 10B, the annular spacer 90 includes the second valve casing 70 (see FIGs. 4A, 4B, and 5) on a side of the communication windows 91 that is adjacent to the second valve casing 70 (see FIGs. 4A, 4B, and 5) instead of the leg parts 93 illustrated in FIG. 10A, and the rim of the communication windows 91 is closed along the entire periphery.

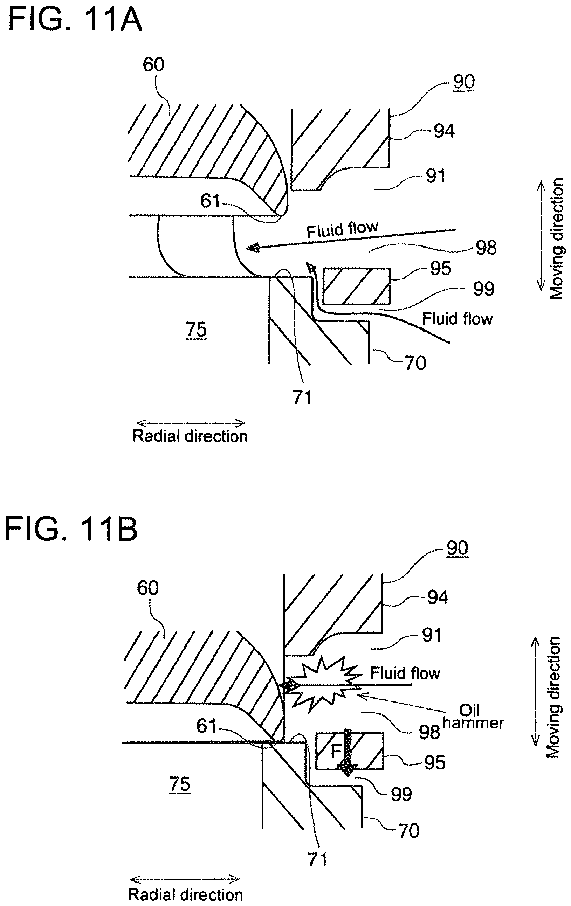

FIG. 11A is a diagram for describing an oil hammer event, and a cross-sectional view schematically illustrating the poppet 60 in a valve-open position and a communication path of the annular spacer 90. FIG. 11B is another diagram for describing the oil hammer event, and a cross-sectional view schematically illustrating the poppet 60 in a valve-closed position and a communication path of the annular spacer 90.

As illustrated in FIG. 11A, when the poppet 60 is in the valve-open position, fluid (e.g. working oil) flows into the channel (opening) 75 from between the poppet 60 and the second valve casing 70 after flowing through the communication windows 91 of the annular spacer 90. Then, as the poppet 60 shifts from the valve-open position to the valve-closed position, the poppet 60 closes the communication windows 91 of the annular spacer 90, and the flow of the fluid collides with the outer peripheral surface of the poppet 60. Due to the shock of the collision, a rim portion 95 of the communication windows 91 that is adjacent to the second valve casing 70 (hereinafter, referred to as a casing-side rim portion 95) receives a stress in a direction toward the second valve casing 70 (direction F in the drawing). Specifically, the pressure of a space 98 formed by the outer peripheral surface of the poppet 60 and the communication windows 91 increases due to the shock of the collision, and the pressure of a space (gap) 99 formed by the casing-side rim portion 95 of the communication windows 91 and the second valve casing 70 decreases, thereby generating a pressure differential between the two spaces 98, 99 disposed on either side of the casing-side rim portion 95 of the communication windows 91. The stress (direction F in the drawing) generated by the pressure differential raises the possibility of damage to the casing-side rim portion 95 of the communication windows 91.

Thus, as illustrated in FIG. 10A, the annular spacer 90 includes the plurality of leg parts 93 extending toward the second valve casing 70, and the communication windows 91 are disposed at positions between adjacent two of the leg parts 93 in the circumferential direction. In this way, it is possible to avoid damage to the annular spacer 90 due to the shock of collision of the flow of the fluid with the outer peripheral surface of the poppet 60 when the poppet 60 shifts from the valve-open position to the valve-closed position.

Further, as illustrated in FIG. 10A, a portion 94 of the annular spacer 90 that is adjacent to the first valve casing 51 as seen from the communication windows 91 may have a thickness t, in the moving direction of the poppet 60, which satisfies a relationship of t ≥ 0.03D, where D is the seat outer diameter of the poppet 60 (see FIG. 8B).

As described above, the influence of the shock due to the collision of the fluid with the outer peripheral surface of the poppet during the valve-closing motion may possibly reach a portion other than the casing-side rim portion 95.

In view of this, in the above configuration, the thickness t of a portion of the annular spacer 90 that is adjacent to the first valve casing 51 as seen from the communication windows 91 is set to be not less than 0.03 times the seat outer diameter D of the poppet 60. The thickness t is a length of the poppet 60 in its moving direction.

In this way, it is possible to provide the annular spacer 90 with the strength to bear the stress generated by the shock of the collision.

As described above, according to at least some embodiments of the present invention, it is possible to suppress a decrease in responsiveness of the valve motion due to a pressure differential caused between the first end surface 61 of the poppet 60 and the poppet surface 63 adjacent to the valve seat 71 when the poppet valve 50 is in motion.

Further, since the hydraulic machine (the hydraulic motor 7 or the hydraulic pump 6 illustrated in e.g. FIG. 1) includes the above poppet valve 50, it is possible to improve the reliability of the hydraulic machine.

The hydraulic machine may be the hydraulic motor 7 (see FIGs. 2, 3) for driving a generator.

Generally, the hydraulic motor 7 for driving a generator is required to operate with a high reliability under harsh operational conditions such as a rotation speed of approximately 1000 rpm, for instance. Thus, as described above, by providing the poppet valve 50 having an excellent responsiveness, it is possible to secure a high reliability which can meet the requirement of the hydraulic motor 7 for driving a generator.

Further, with the power generating apparatus of renewable-energy type 1 (see FIG. 1) including the above hydraulic machine, it is possible to operate the power generating apparatus of renewable-energy type stably.

Embodiments of the present invention were described in detail above, but the present invention is not limited thereto, and various amendments and modifications may be implemented.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

## Claims

1. A poppet valve (50), comprising:
a valve seat (71);
a poppet (60) disposed so as to face the valve seat (71) ;
an actuator (54) for driving the poppet (60); and
a first valve casing (51) in which the actuator (54) is accommodated,
wherein the first valve casing (51) or a plate member (80) interposed between the poppet (60) and the first valve casing (51) includes a contact surface (53) configured to be capable of partially contacting an end surface (61) of the poppet (60), the end surface (61) being opposite to the valve seat (71),
wherein at least one of the contact surface (53) or the end surface (61) of the poppet (60) has an uneven section (100) which forms one or more space/spaces (105) between the end surface (61) of the poppet (60) and the plate member (80) or the first valve casing (51) while the end surface (61) of the poppet (60) is in partial contact with the contact surface (53),
a total angular range (θ), in the circumferential direction of the poppet (60), in which any one of the one or more space/spaces (105) intersects with a fictive line (110) parallel to a radial direction and passing through a center axis (O) of the poppet (60), is not less than 180 angular degrees, **characterized in that** the poppet valve (50) further comprises:
a second valve casing (70) forming the valve seat (71); and
an annular spacer (90) which is disposed on a radially outer side of the poppet (60) and between the first valve casing (51) and the second valve casing (70), and on which at least one communication window (91,92) for bringing an exterior space into communication with an interior space (66) accommodating the poppet (60) is formed,
wherein the annular spacer (90) includes a plurality of leg parts (93) extending toward the second valve casing (70),
wherein the plurality of leg parts (93) are arranged at intervals in a circumferential direction of the annular spacer (90), and
wherein the at least one communication window (91) is disposed on a position between adjacent two of the leg parts (93) in the circumferential direction.

2. The poppet valve (50) according to claim 1, further comprising
a biasing member (56) for biasing the poppet (60) toward the valve seat (71),
wherein each of the poppet (60) and the first valve casing (51) includes a magnetic part, and
wherein the actuator (54) includes a solenoid (55) configured to generate an electromagnetic force which attracts the poppet (60) toward the first valve casing (51) in an excited state against a biasing force of the biasing member (56).

3. The poppet valve (50) according to claim 2, further comprising
a non-magnetic part disposed between the end surface (61) of the poppet (60) and the first valve casing (51), the non-magnetic part being a non-magnetic layer forming the end surface (61) of the poppet (60) or the plate member (80) which is non-magnetic.

4. The poppet valve (50) according to any one of claims 1 to 3,
wherein a contact area S₁ between the end surface (61) of the poppet (60) and the contact surface (53) is smaller than a non-contact area S₂ of the end surface (61) of the poppet (60), the non-contact area S₂ not contacting the contact surface (53).

5. The poppet valve (50) according to any one of claims 1 to 4,
wherein the uneven section (100) is formed in a mesh shape by a plurality of first grooves (101) and a plurality of second grooves (102) intersecting with the first grooves (101) .

6. The poppet valve (50) according to any one of claims 1 to 4,
wherein the uneven section (100) is formed by a protruding portion (104) disposed on at least one of the end surface (61) of the poppet (60) or the contact surface (53).

7. The poppet valve (50) according to any one of claims 1 to 4,
wherein the uneven section (100) is formed by a drain groove (106) of working oil of a hydraulic machine, the drain groove (106) being disposed on at least one of the end surface (61) of the poppet (60) or the contact surface (53).

8. The poppet valve (50) according to any one of claims 1 to 4,
wherein the uneven section (100) is formed by a surface (108) processed by crowning disposed on at least one of the end surface (61) of the poppet (60) or the contact surface (53) .

9. The poppet valve (50) according to any one of claims 1 to 8,
wherein a portion of the annular spacer (90), the portion being disposed on a side adjacent to the first valve casing (51) as seen from the at least one communication window (91), has a thickness t in a moving direction of the poppet (60), the thickness t satisfying a relationship of t ≥ 0.03D, where D is a seat outer diameter of the poppet (60).

10. A hydraulic machine (7) comprising:
a cylinder (22);
a piston (24) reciprocating in the cylinder (22); and
a poppet valve (50) according to any one of claims 1 to 9 configured to control a communication state between an exterior flow channel (8;9) and a working chamber (26) formed by the cylinder (22) and the piston (24).

11. The hydraulic machine (7) according to claim 10,
wherein the hydraulic machine (7) is connected to a high-pressure oil flow channel (8) through which high-pressure oil flows in operation and to a low-pressure oil flow channel (9) through which low-pressure oil flows in operation, and
wherein the poppet valve (50) is configured to control a communication state between the high-pressure oil flow channel (8) and the working chamber (26).

12. The hydraulic machine (7) according to claim 10 or 11 which is a hydraulic motor (7) for driving a generator (10).

13. A power generating apparatus of renewable-energy type (1), comprising:
a rotor (5) configured to rotate by receiving renewable energy;
a hydraulic pump (6) configured to be driven by the rotor (5) to increase a pressure of working oil;
a hydraulic motor (7) configured to be driven by the working oil; and
a generator (10) configured to be driven by the hydraulic motor,
wherein at least one of the hydraulic pump (6) or the hydraulic motor (7) is the hydraulic machine according to claim 10 or 11.

## Patentansprüche

1. Ein Tellerventil (50) mit:
einem Ventilsitz (71),
einem Teller (60), der so angeordnet ist, dass er dem Ventilsitz (71) zugewandt ist,
einem Aktuator (54) zum Antreiben des Tellers (60), und
einem ersten Ventilgehäuse (51), in dem der Aktuator (54) aufgenommen ist,
wobei das erste Ventilgehäuse (51) oder ein Plattenelement (80), das zwischen dem Teller (60) und dem ersten Ventilgehäuse (51) eingefügt ist, eine Kontaktoberfläche (53) aufweist, die konfiguriert ist, um eine Endoberfläche (61) des Tellers (60) partiell zu berühren, wobei die Endoberfläche (61) gegenüber dem Ventilsitz (71) ist,
wobei zumindest eine von der Kontaktoberfläche (53) oder der Endoberfläche (61) des Tellers (60) einen ungleichmäßigen Abschnitt (100) besitzt, der einen oder mehrere Raum/Räume (105) zwischen der Endoberfläche (61) des Tellers (60) und dem Plattenelement (80) oder dem ersten Ventilgehäuse (51) bildet, während die Endoberfläche (61) des Tellers (60) in partiellem Kontakt mit der Kontaktoberfläche (53) ist,
wobei ein Gesamtwinkelbereich (θ) in der Umfangsrichtung des Tellers (60), in dem sich irgendeiner von dem einen Raum oder den mehreren Räumen (105) mit einer fiktiven Linie (110) schneidet, die parallel zu einer Radialrichtung ist und durch eine Mittelachse (O) des Tellers (60) verläuft, nicht weniger als 180 Winkelgrad beträgt,
**dadurch gekennzeichnet, dass**
das Tellerventil (50) ferner aufweist:
ein zweites Ventilgehäuse (70), das den Ventilsitz (71) bildet, und
einen ringförmigen Abstandhalter (90), der an einer radial äußeren Seite des Tellers (60) und zwischen dem ersten Ventilgehäuse (51) und dem zweiten Ventilgehäuse (70) angeordnet ist und an dem zumindest ein Verbindungsfenster (91,92), um einen externen Raum in Verbindung mit einem internen Raum (66), der den Teller (60) aufnimmt, ausgebildet ist,
wobei der ringförmige Abstandhalter (90) eine Vielzahl von Beinteilen (93) besitzt, die sich zu dem zweiten Ventilgehäuse (70) erstrecken,
wobei die Vielzahl von Beinteilen (93) in Intervallen in einer Umfangsrichtung des ringförmigen Abstandhalters (90) angeordnet sind, und
wobei das zumindest eine Verbindungsfenster (91) an einer Position zwischen benachbarten zwei der Beinteile (93) in der Umfangsrichtung angeordnet ist.

2. Das Tellerventil (50) gemäß Anspruch 1, ferner mit
einem Vorbelastungselement (56) zum Vorbelasten des Tellers (60) zu dem Ventilsitz (71),
wobei jedes von dem Teller (60) und dem ersten Ventilgehäuse (51) ein Magnetteil aufweist, und
wobei der Aktuator (54) ein Solenoid (55) aufweist, das konfiguriert ist, um eine elektromagnetische Kraft zu erzeugen, welche den Teller (60) zu dem ersten Ventilgehäuse (51) in einem angeregten Zustand gegen eine Vorbelastungskraft des Vorbelastungselements (56) anzieht.

3. Das Tellerventil (50) gemäß Anspruch 2, ferner mit
einem nichtmagnetischen Teil, das zwischen der Endoberfläche (61) des Tellers (60) und dem ersten Ventilgehäuse (51) angeordnet, wobei das nichtmagnetische Teil eine nichtmagnetische Lage ist, die die Endoberfläche (61) des Tellers (60) bildet, oder das Plattenelement (80), das nicht magnetisch ist, ist.

4. Das Tellerventil (50) gemäß einem der Ansprüche 1 bis 3, wobei eine Kontaktfläche S₁ zwischen der Endoberfläche (61) des Tellers (60) und der Kontaktoberfläche (53) kleiner ist als eine Nicht-Kontaktfläche S₂ der Endoberfläche (61) des Tellers (60), wobei die Nicht-Kontaktfläche S₂ die Kontaktoberfläche (53) nicht kontaktiert.

5. Das Tellerventil (50) gemäß einem der Ansprüche 1 bis 4,
wobei der ungleichmäßige Abschnitt (100) in einer Gitter- oder Netzform durch eine Vielzahl von ersten Nuten (101) und eine Vielzahl von zweiten Nuten (102), die die ersten Nuten (101) schneiden, gebildet ist.

6. Das Tellerventil (50) gemäß einem der Ansprüche 1 bis 4,
wobei der ungleichmäßige Abschnitt (100) durch einen vorstehenden Abschnitt (104) gebildet ist, der an bzw. auf zumindest einer von der Endoberfläche (61) des Tellers (60) oder der Kontaktoberfläche (53) angeordnet ist.

7. Das Tellerventil (50) gemäß einem der Ansprüche 1 bis 4,
wobei der ungleichmäßige Abschnitt (100) durch eine Drainagenut (106) für Arbeitsöl einer hydraulischen Maschine gebildet ist, wobei die Drainagenut (106) an bzw. auf zumindest einer von der Endoberfläche (61) des Tellers (60) oder der Kontaktoberfläche (53) angeordnet ist.

8. Das Tellerventil (50) gemäß einem der Ansprüche 1 bis 4,
wobei der ungleichmäßige Abschnitt (100) durch eine Oberfläche (108) gebildet ist, die durch Bombieren (englisch: "crowning") bearbeitet ist und die an bzw. auf zumindest einer von der Endoberfläche (61) des Tellers (60) oder der Kontaktoberfläche (53) angeordnet ist.

9. Das Tellerventil (50) gemäß einem der Ansprüche 1 bis 8, wobei ein Abschnitt des ringförmigen Abstandhalters (90), welcher Abschnitt an einer Seite angrenzend an das erste Ventilgehäuse (51) von dem zumindest einen Verbindungsfenster (91) her betrachtet angeordnet ist, eine Dicke t in einer Bewegungsrichtung des Tellers (60) besitzt, wobei die Dicke t eine Beziehung von t ≥ 0.03D erfüllt, wobei D ein Sitz-Außendurchmesser des Tellers (60) ist.

10. Eine hydraulische Maschine (7) mit:
einem Zylinder (22),
einem Kolben (24), der sich in dem Zylinder (22) hin- und-her bewegt, und
einem Tellerventil (50) gemäß einem der Ansprüche 1 bis 9, konfiguriert, um einen Verbindungszustand zwischen einem äußeren Strömungskanal (8;9) und einer Arbeitskammer (26), die durch den Zylinder (22) und den Kolben (24) gebildet ist, zu steuern.

11. Die hydraulische Maschine (7) gemäß Anspruch 10,
wobei die hydraulische Maschine (7) mit einem Hochdrucköl-Strömungskanal (8), durch den Hochdrucköl im Betrieb strömt, und mit einem Niederdrucköl-Strömungskanal (9) durch den Niederdrucköl im Betrieb strömt, verbunden ist, und
wobei das Tellerventil (50) konfiguriert ist, um einen Verbindungszustand zwischen dem Hochdrucköl-Strömungskanal (8) und der Arbeitskammer (26) zu steuern.

12. Die hydraulische Maschine (7) gemäß Anspruch 10 oder 11, die ein hydraulischer Motor (7) zum Antreiben eines Generators (10) ist.

13. Eine Stromerzeugungsvorrichtung für erneuerbare Energie (1), mit:
einem Rotor (5), der konfiguriert ist, um durch Aufnahme von erneuerbarer Energie zu drehen,
einer hydraulischen Pumpe (6), die konfiguriert ist, um durch den Rotor (5) zum Erhöhen eines Drucks von Arbeitsöl angetrieben zu werden,
einem hydraulischen Motor (7), der konfiguriert ist, um durch das Arbeitsöl angetrieben zu werden, und
einem Generator (10), der konfiguriert ist, um durch den hydraulischen Motor angetrieben zu werden,
wobei zumindest eine von der hydraulischen Pumpe (6) oder dem hydraulischen Motor (7) die hydraulische Maschine gemäß Anspruch 10 oder 11 ist.

## Revendications

1. Soupape (50) en champignon, comportant :
un siège (71) de soupape ;
un champignon (70) disposé de manière à faire face au siège (71) de soupape ;
un actionneur (54) pour entraîner le champignon (60) ; et
un premier boîtier (51) de soupape dans lequel est reçu l'actionneur (54),
dans laquelle le premier boîtier (51) de soupape ou un élément (80) en forme de plaque interposé entre le champignon (60) et le premier boîtier (51) de soupape comporte une surface (53) de contact configurée pour être capable d'être en contact partiellement avec une surface (61) d'extrémité du champignon (60), la surface (61) d'extrémité faisant face au siège (71) de soupape, dans lequel
au moins l'une de la surface (53) de soupape ou de la surface (61) d'extrémité du champignon (60) a une section (100) non-uniforme qui forme un ou plusieurs espace/espaces (105) entre la surface (61) d'extrémité du champignon (60) et l'élément (80) en forme de plaque ou le premier boîtier (51) de soupape tandis que la surface (61) d'extrémité du champignon (60) est en contact partiel avec la surface (53) de contact,
un domaine angulaire total (θ), dans la direction circonférentielle du champignon (60), dans laquelle n'importe lequel du un ou plusieurs espace/espaces (105) vient couper une ligne (110) fictive parallèle à une direction radiale et passant par un axe (O) central du champignon (60), n'est pas inférieure à 180 degrés, **caractérisée en ce que**
la soupape (50) en champignon comporte en outre :
un deuxième boîtier (70) de soupape formant le siège (71) de soupape ; et
une entretoise (90) annulaire qui est disposée sur un côté radialement à l'extérieur du champignon (60) et entre le premier boîtier (51) de soupape et le deuxième boîtier (70) de soupape, et sur lequel au moins une fenêtre (91, 92) de communication pour mettre en communication un espace extérieur avec un espace (66) intérieur recevant le champignon (60) est formée,
dans laquelle l'entretoise (90) annulaire comporte une pluralité de parties (93) formant jambe s'étendant en direction du deuxième boîtier (70) de soupape,
dans laquelle la pluralité de parties (93) formant jambe sont disposées à des intervalles dans une direction circonférentielle de l'entretoise (90) annulaire, et
dans laquelle la au moins une fenêtre (91) de communication est disposée à une position entre deux parties de jambe adjacentes des parties (93) de jambe dans la direction circonférentielle.

2. Soupape (50) en champignon suivant la revendication 1, comportant en outre
un élément (56) de sollicitation pour solliciter le champignon (60) en direction du siège (71) de soupape,
dans laquelle chacun du champignon (60) et du premier boîtier (51) de soupape comporte une partie magnétique, et
dans laquelle l'actionneur (50) comporte un électroaimant (55) configuré pour produire une force électromagnétique qui attire le champignon (60) vers le premier boîtier (51) de soupape dans un état excité à l'encontre d'une force de sollicitation de l'élément (56) de sollicitation.

3. Soupape (50) en champignon suivant la revendication 2, comportant en outre
une partie non-magnétique disposée entre la surface (61) d'extrémité du champignon (60) et le premier boîtier (51) de soupape, la partie non-magnétique étant une couche non-magnétique formant la surface (61) d'extrémité du champignon (60) ou l'élément (80) en forme de plaque qui n'est pas magnétique.

4. Soupape (50) en champignon suivant l'une quelconque des revendications 1 à 3,
dans laquelle une aire S₁ de contact entre la surface (61) d'extrémité du champignon (60) et la surface (53) de contact est plus petite qu'une aire S₂ de non-contact de la surface (61) d'extrémité du champignon (60), l'aire S₂ de non-contact n'étant pas en contact avec la surface (53) de contact.

5. Soupape (50) en champignon suivant l'une quelconque des revendications 1 à 4,
dans laquelle la section (100) non-uniforme est formée suivant une forme en maille par une pluralité de premières rainures (101) et une pluralité de deuxièmes rainures (102) venant en intersection avec les premières rainures (101).

6. Soupape (50) en champignon suivant l'une quelconque des revendications 1 à 4,
dans laquelle la section (100) non-uniforme est formée par une partie (104) faisant saillie disposée sur au moins l'une de la surface (61) d'extrémité du champignon (60) ou de la surface (53) de contact.

7. Soupape (50) en champignon suivant l'une quelconque des revendications 1 à 4,
dans laquelle la section (100) non-uniforme est formée par une rainure (106) de drain d'huile de travail d'une machine hydraulique, la rainure (106) de drain étant disposée sur au moins l'une de la surface (61) d'extrémité du champignon (60) ou de la surface (53) de contact.

8. Soupape (50) en champignon suivant l'une quelconque des revendications 1 à 4,
dans laquelle la section (100) non-uniforme est formée par une surface (108) traitée par effet couronne disposée sur au moins l'une de la surface (61) d'extrémité du champignon (60) ou de la surface (53) de contact.

9. Soupape (50) en champignon suivant l'une quelconque des revendications 1 à 8,
dans laquelle une partie de l'entretoise (90) annulaire, la partie étant disposée sur un côté adjacent au premier boîtier (51) de contact tel que vu à partir de la au moins une fenêtre (91) de communication, a une épaisseur t dans une direction de déplacement du champignon (60), l'épaisseur t satisfaisant une relation consistant en t ≥ 0,03D, où d est un diamètre extérieur de siège du champignon (60).

10. Machine (7) hydraulique comportant :
un cylindre (22) ;
un piston (24) effectuant un mouvement de va-et-vient dans le cylindre (22) ; et
une soupape (50) en champignon suivant l'une quelconque des revendications 1 à 9 configurée pour commander un état de communication entre un canal (8; 9) d'écoulement extérieur et une chambre (26) de travail formée par le cylindre (22) et le piston (24).

11. Machine (7) hydraulique suivant la revendication 10,
dans laquelle la machine (7) hydraulique est connectée à un canal (8) d'écoulement d'huile à haute-pression par lequel de l'huile à haute-pression s'écoule en fonctionnement et à un canal (9) d'écoulement d'huile à basse-pression par lequel de l'huile à basse-pression s'écoule en fonctionnement, et
dans laquelle la soupape (50) en champignon est configurée pour commander un état de communication entre le canal (8) d'écoulement d'huile à haute-pression et la chambre (26) de travail.

12. Machine (7) hydraulique suivant la revendication 10 ou 11 qui est un moteur hydraulique pour entraîner un générateur (10).

13. Dispositif de production d'énergie du type (1) à énergie-renouvelable, comportant :
un rotor (5) configuré pour tourner par le fait de recevoir de l'énergie renouvelable ;
une pompe (6) hydraulique configurée pour être entraînée par le rotor (5) pour augmenter une pression d'huile de travail ;
un moteur (7) hydraulique configuré pour être entraîné par l'huile de travail ; et
un générateur (10) configuré pour être entraîné par le moteur hydraulique,
dans lequel au moins l'un de la pompe (6) hydraulique ou du moteur (7) hydraulique est la machine hydraulique suivant la revendication 10 ou 11.
